# EUROPÄISCHE PATENTSCHRIFT

(11) **EP 1 812 303 B1**
(45) Veröffentlichungstag und Bekanntmachung des Hinweises auf die Patenterteilung: **04.08.2010**
(21) Anmeldenummer: 05798475.9
(22) Anmeldetag: 28.10.2005
(51) Int. Cl.: B65D 33/24, B65D 33/25, B65D 33/34, B31B 19/90

(54) **BEUTELPACKUNG SOWIE VERFAHREN ZUM HERSTELLEN DERSELBEN**
PACKAGING SACHET AND METHOD FOR PRODUCING THE SAME
SACHET D'EMBALLAGE ET PROCEDE DE PRODUCTION ASSOCIE

(30) Priorität: 19.11.2004 DE 102004056043
(43) Veröffentlichungstag der Anmeldung: 01.08.2007
(73) Patentinhaber: Focke & Co. (GmbH & Co. KG), 27283 Verden (DE)
(72) Erfinder: ROESINK, Hermann, 1391 ED Abcoude (NL); EHRHARDT, Claus, 21075 Hamburg (DE)
(74) Vertreter: Bolte, Erich
(86) Internationale Anmeldenummer: PCT/EP2005/011538
(87) Internationale Veröffentlichungsnummer: WO 2006/061062

(56) Entgegenhaltungen:
- EP-A- 1 338 525
- EP-A- 1 464 585
- WO-A-02/30772
- US-A- 4 561 109
- US-A1- 2003 019 780
- US-A1- 2004 131 285

## Beschreibung

Die Erfindung betrifft einen Beutel aus Folie oder dergleichen für Schüttgüter oder faseriges Material, insbesondere für eine Tabakportion als Packungsinhalt, bestehend aus Vorderwand und Rückwand, die eine (obere) Öffnung begrenzen und seitlich sowie im Bereich eines der Öffnung gegenüberliegenden Bodens bzw einer Bodenkante vor dem Einfüllen des Packungsinhalts miteinander verbunden sind. Weiterhin bezieht sich die Erfindung auf Verfahren zum Herstellen von Beutelpackungen, gemäß dem Oberbegriff des Anspruchs 7.

Neuerdings sind Tabakbeutel der vorgenannten Ausführung bekannt geworden, bei denen die Beutelöffnung mit einem sogenannten Ziplock versehen ist. Dieses besteht üblicherweise aus zwei Profilstücken, die sich an der Innenseite von Vorderwand und Rückwand im Bereich der Beutelöffnung erstrecken und in Schließstellung mit Vorsprüngen und Vertiefungen ineinander greifen. Solche Beutel sind beilspielsweise aus EP 1 464 585 A2 und EP 1 338 525 A2 bekannt.

Der Erfindung liegt die Aufgabe zugrunde, Beutelpackungen, insbesondere Tabakbeutel, hinsichtlich ihrer Ausgestaltung sowie in Bezug auf die Herstellung zu verbessern, derart, dass eine bessere Handhabung und problemlose Fertigung gegeben sind.

Zur Lösung dieser Aufgabe weist ein erfindungsgemäßer Beutel die Merkmale des Anspruchs 1 auf.

Die Erkenntnis der Erfindung besteht darin, dass die Befüllung des Beutels und die Entnahme des Beutelinhalts jeweils über gesonderte, voneinander getrennte, jedoch unmittelbar benachbart Öffnungen erfolgen muss, so dass jede Öffnung hinsichtlich ihrer Gestaltung an die zugewiesene Aufgabe angepasst sein kann. Die Füllöffnung ist erfindungsgemäß nach dem Einfüllen des Beutelinhalts dauerhaft verschlossen, insbesondere durch eine Verschlussnaht. Die Entnahmeöffnung ist mit einem mehrfach wirkenden Verschlussmittel versehen, nämlich mit einem Ziplock. Insbesondere ist der Beutel so ausgebildet, dass die Verschlussnaht am freien, oberen Rand der Vorderwand und die Entnahmeöffnung mit Ziplock zwischen Verschlussnaht und Beutelinhalt positioniert ist. Zwischen Ziplock und Verschlussnaht weist der Beutel, nämlich die Vorderwand, eine Materialschwächung auf, insbesondere eine Perforationslinie, die bei erstmaliger Ingebrauchnahme des Beutels geöffnet wird, um so die Entnahmeöffnung zu schaffen.

Bei der Herstellung des Beutels wird erfindungsgemäß so verfahren, dass das mehrfach wirkende Verschlussmittel (Ziplock) an einer fortlaufenden Materialbahn bzw. Folienbahn im Bereich einer Innenseite der Vorderwand mit dieser verbunden, sodann quergerichtete Nähte, nämlich Seitennähte des Beutels angebracht und danach die Beutel von der Materialbahn abgetrennt werden. Sodann wird der Packungsinhalt über die Füllöffnung eingeführt, diese mittels Verschlussnaht verschlossen, insbesondere unter gleichzeitiger Verbindung des Ziplocks mit der Rückwand des Beutels.

Ausführungsbeispiele des erfindungsgemäßen Beutels sowie des erfindungsgemäßen Verfahrens und einer nicht zur Erfindung gehörenden Vorrichtung werden nachfolgend anhand der Zeichnungen näher erläutert. Es zeigt:
- Fig. 1: einen geschlossenen (Tabak-)Beutel in perspektivischer Darstellung,
- Fig. 2: eine andere Ausführung eines Beutels, ebenfalls in perspektivischer Dar- stellung,
- Fig. 3: ein Verschlussbereich des Beutels gemäß Fig. 1 in einem Vertikalschnitt III- III, bei vergrößerter Darstellung,
- Fig. 4: die Einzelheit gemäß Fig. 3 nach Öffnen einer Schwächungslinie zur Bil- dung der Entnahmeöffnung,
- Fig. 5: die Einzelheit gemäß Fig. 3, Fig. 4 bei geöffnetem Ziplock,
- Fig. 6: die Einzelheit gemäß Fig. 3 bis Fig. 5 bei wiederverschlossenem Ziplock,
- Fig. 7 bis Fig. 10: Darstellungen analog Fig. 3 bis Fig. 6 des Ausführungsbeispiels gemäß Fig. 2,
- Fig. 11: eine Momentaufnahme bei der Fertigung von Beuteln, nämlich Aufbringen von Ziplock-Teilen auf eine Materialbahn in perspektivischer Darstellung,
- Fig. 12: eine nachfolgende Phase der Fertigung, nämlich Bildung von Beuteln aus der Materialbahn, ebenfalls perspektivisch,
- Fig. 13: die Befüllung von Beuteln und deren Verschluss, ebenfalls in perspektivi- scher Darstellung,
- Fig. 14: eine Einzelheit einer Vorrichtung zum Herstellen und Füllen von Beuteln, nämlich eine Bearbeitungseinheit mit einem (ersten) Siegelaggregat in schematischer Seitenansicht,
- Fig. 15: ein (zweites) Siegelaggregat zur Bearbeitung von Beuteln in Seitenansicht,
- Fig. 16: eine Einzelheit der Einheit gemäß Fig. 14, nämlich eine Queransicht bzw. ein Vertikalschnitt in der Ebene XVI-XVI der Fig. 14,
- Fig. 17: einen Quer- bzw. Radialschnitt XVII-XVII zu Fig. 14,
- Fig. 18: einen Quer- bzw. Radialschnitt XVIII-XVIII im Bereich des Siegelaggregats der Fig. 14,
- Fig. 19: einen Vertikalschnitt XIX-XIX der Fig. 15,
- Fig. 20: eine Ansicht eines Beutels entsprechend Pfeil XX in Fig. 3.

Die dargestellten Ausführungsbeispiele beziehen sich auf die Ausbildung und Fertigung von Tabakbeuteln 10 für eine Tabakportion 11 als Packungsinhalt. Der Beutel 10 besteht aus dünnem Verpackungsmaterial, insbesondere einer thermisch siegelbaren Folie. Ein Zuschnitt zur Bildung eines Beutels 10 ist unter Bildung einer Bodenkante 12 gefaltet, so dass eine Vorderwand 13 und eine Rückwand 14 aneinander liegen bzw. den Beutel 10 zur Aufnahme der Tabakportion 11 bilden. Im Bereich seitlicher Ränder sind Vorderwand 13 und Rückwand 14 dauerhaft miteinander verbunden, und zwar durch (aufrechte) Seitennähte 15, 16. Alternativ kann in diesem Bereich jeweils eine gefaltete Seitenwand angebracht sein. Die Rückwand 14 des Beutels 10 ist mit einer Verlängerung bzw. Fortsetzung versehen zur Bildung einer Umschlaglasche 17, die bei geschlossenem Beutel 10 gegen die Vorderwand 13 umgelegt und mit dieser lösbar verbunden ist, zum Beispiel mittels Klebeetikett 18.

Der Beutel 10 weist zwei unabhängig voneinander handhabbare Öffnungen auf, nämlich eine Füllöffnung 19 und eine Entnahmeöffnung 20. Die Füllöffnung 19 dient (lediglich) zum Einführen des Beutelinhalts, also der Tabakportion 11 in den Beutel 10. Danach wird die Füllöffnung 19 dauerhaft verschlossen. Die Entnahmeöffnung 20 wird erst bei Ingebrauchnahme des Beutels 10 geöffnet.

Die Füllöffnung 19 erstreckt sich quer zum Beutel 10 und ist durch Vorderwand 13 und Rückwand 14 begrenzt. Bei den Beispielen befindet sich die Füllöffnung 19 an einem oberen Querrand 21 der Vorderwand 13. Die Füllöffnung 19 erstreckt sich über die annähernd volle Breite des Beutels 10, nämlich zwischen den beiden Seitennähten 15, 16. Nach Einfüllen der Tabakportion 11 in den Beutel wird die Füllöffnung 19 dauerhaft geschlossen, nämlich durch eine Verschlussnaht 22, die sich - mit geringem Abstand vom Querrand 21 - über die volle Breite des Beutels 10 bzw. mindestens zwischen den Seitennähten 15, 16 erstreckt. Die Verschlussnaht 22 ist insbesondere durch thermisches Siegeln des Verpackungsmaterials gebildet.

Die Entnahmeöffnung 20 ist ausschließlich im Bereich von Vorderwand 13 oder Rückwand 14 angeordnet, hier im Bereich der Vorderwand 13, und zwar unmittelbar unterhalb der Verschlussnaht 22. Die Entnahmeöffnung 20 besteht zum einen aus einem Durchbruch in der Vorderwand 13 und zum anderen aus mehrfach wirkenden Verschlussmitteln, die ein Wiederverschließen der Entnahmeöffnung 20 nach Entnahme von Teilportionen des Packungsinhalts ermöglichen.

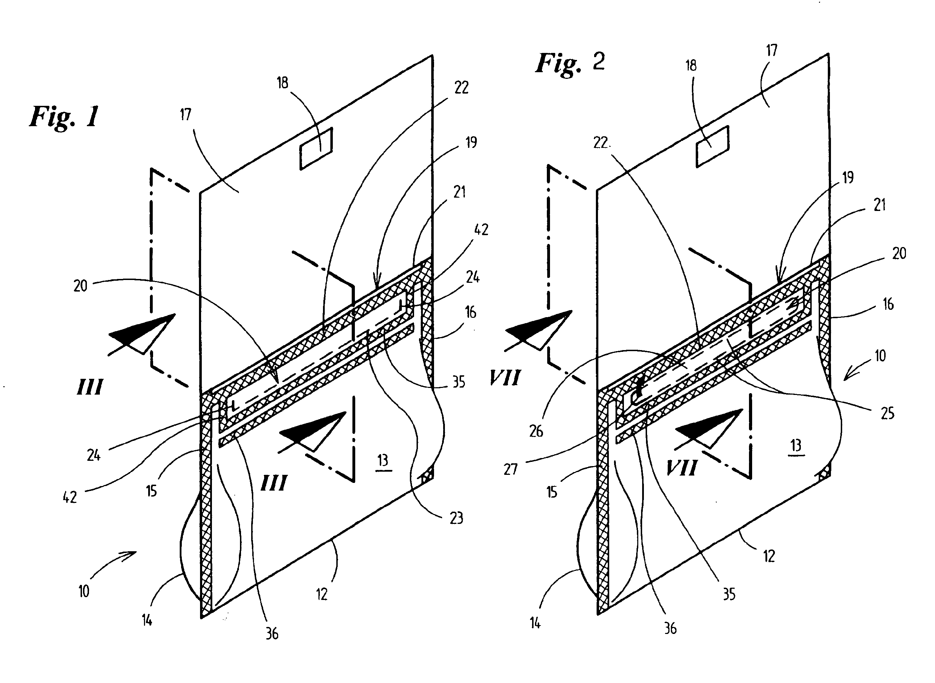

Die eigentliche Entnahmeöffnung 20 wird durch Schwächungslinien in der Folie der Vorderwand 13 gebildet. Bei dem Ausführungsbeispiel der Fig. 1 ist eine quergerichtete Perforationslinie 23 angeordnet. Diese endet mit Abstand von den Seitenrändern bzw. Seitennähten 15, 16 des Beutels 10, so dass die Entnahmeöffnung 20 eine geringere Längserstreckung hat als die Füllöffnung 19. Die einfache Perforationslinie 23 ist an den Enden mit jeweils einem quergerichteten Perforationsschenkel 24 versehen. Dadurch entsteht eine Öffnungslasche bzw. eine vergrößerte Entnahmeöffnung 20.

Bei dem Ausführungsbeispiel der Fig. 2 ist eine geschlossene Perforationslinie 25 vorgesehen mit zwei parallelen, miteinander verbundenen Abschnitten. Diese definieren einen heraustrennbaren Verschlussstreifen 26 des Folienmaterials. An einem Ende ist der Verschlussstreifen 26 durch U-förmige Perforation mit einer Grifflasche 27 versehen.

Im Bereich der Entnahmeöffnung 20 ist ein Ziplock 28 als mehrfach wirkendes Verschlussmittel positioniert. Das Ziplock besteht aus zwei Profilstreifen 29, 30, die auseinander gezogen und durch Druck miteinander verbunden werden können. Jeder Profilstreifen 29, 30 weist einen Trägerstreifen 31, 32 und an diesen angebrachte Verbindungsprofile 33, 34 auf. Die Profilstreifen 29, 30 bestehen aus einem thermisch siegelbaren Material und sind durch Siegeln mit Vorderwand 13 und Rückwand 14 verbunden, und zwar derart, dass die Verbindungsprofile 33, 34 unterhalb der Entnahmeöffnung 20 liegen. In Schließstellung treten die rippenartigen Verbindungsprofile 33, 34 wechselseitig formschlüssig ineinander und bilden so eine wirksame, aber leicht zu öffnende Verbindung über die volle Erstreckung der Entnahmeöffnung 20.

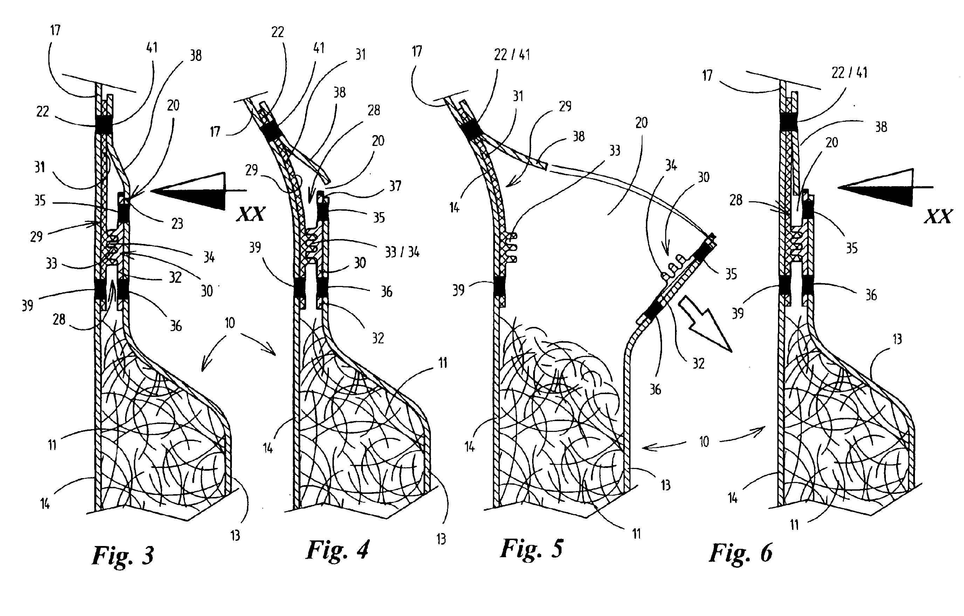

Die Konstruktion des Beutels 10 im Bereich der Entnahmeöffnung 20 ist in besonderer Weise ausgebildet. Der der Innenseite der Vorderwand 13 zugekehrte Profilstreifen 30 ist durch zwei parallele Verbindungsnähte 35, 36 in einem oberen Randbereich an der Vorderwand 13 befestigt. Der Trägerstreifen 32 ist so positioniert, dass ein Überstand 37 gegenüber der Perforationslinie 25 bzw. einem unterem Rand der Entnahmeöffnung 20 geschaffen ist. Der Überstand 37 ist farbig markiert und fixiert nach erstmaligem Öffnen des Beutels 10 einen oberhalb der Perforationslinie 25 entstehenden Folienstreifen 38 in Schließstellung (Fig. 6). Die Verbindungsnähte 35, 36 sind oberhalb und unterhalb der Verbindungsprofile 33, 34 angeordnet.

Der zugeordnete Profilstreifen 29 weist einen Trägerstreifen 31 mit größerer Breite auf. Dieser ist unterhalb des Verbindungsprofils 33 mittels Verbindungsnaht 39 innenseitig an der Rückwand 14 befestigt und oberhalb des Verbindungsprofils 33 durch die Verschlussnaht 22 erfasst, die demnach drei Materiallagen miteinander verbindet. Die unteren Verbindungsnähte 36 und 39 liegen auf gleicher Höhe.

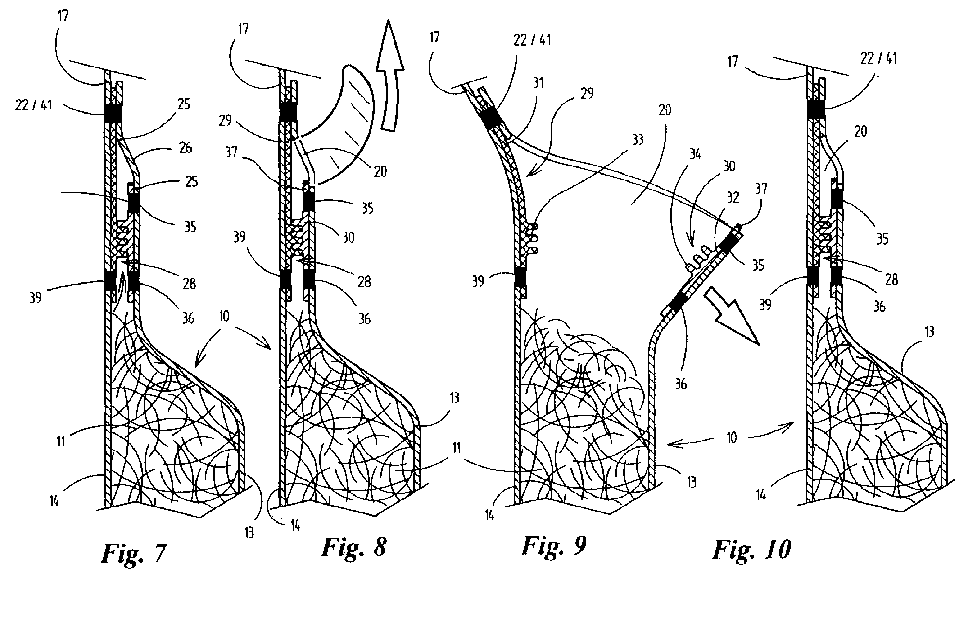

Bei erstmaliger Ingebrauchnahme des Beutels 10 wird von Hand die Perforationslinie 25 durchtrennt oder der Verschlussstreifen 26 aus der Vorderwand 13 herausgetrennt. Danach wird durch Erfassen der über das Ziplock 28 hinwegragenden freien Laschen des Beutels das Ziplock 28 auseinander gezogen (Fig. 5). Tabak kann nun entnommen werden. Danach werden die Verbindungsprofile 33, 34 wieder von Hand aneinander gedrückt, so dass sich eine Verschlussstellung entsprechend Fig. 6 bzw. Fig. 10 ergibt.

Eine Besonderheit ist die Herstellung und Füllung der Beutel. Auf eine fortlaufende Materialbahn 40 bzw. Folienbahn werden zunächst benachbart zu einem freien Seitenrand die Schwächungslinien für die Entnahmeöffnung 20 angebracht, nämlich die Perforationslinie 23 bzw. 25, einschließlich Perforationsschenkel 24. Danach wird im Bereich dieser Perforationen das Ziplock 28 aufgelegt. Die einander zugeordneten Profilstreifen 29, 30 werden auf die Materialbahn 40 aufgebracht, und zwar auf der die Innenseite der Vorderwand 13 bildenden, nach oben gekehrten Seite. Das aus den beiden Profilstreifen 29, 30 bestehende Ziplock 28 wird in Abschnitten aufgebracht entsprechend der Abmessung eines Beutels 10. Die Relativstellung ist so gewählt, dass der Profilstreifen 30 nach unten gerichtet ist.

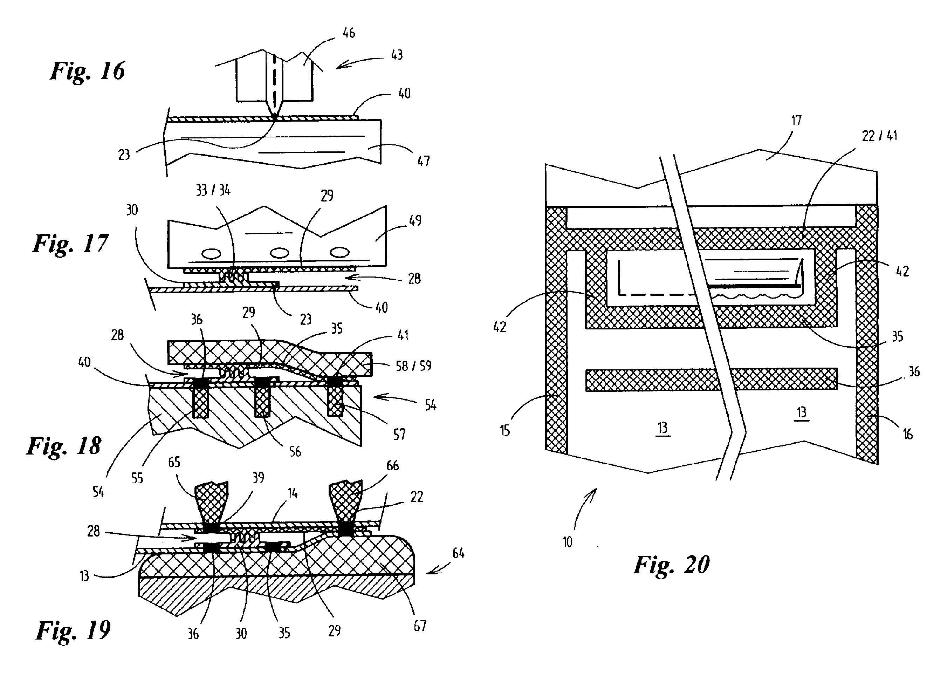

Die auf die Materialbahn 40 aufgelegten Abschnitte des Ziplocks 28 werden mit der Materialbahn 40 durch Anbringen von Siegelnähten verbunden. In einem ersten kontinuierlichen Siegelverfahren werden die Verbindungsnähte 35 und 36 zum Verbinden des frontseitigen Profilstreifens 30 mit der Vorderwand 13 angebracht. Des Weiteren wird eine Vornaht 41 hergestellt, durch die ein oberer Teil bzw. Schenkel des innenseitigen Profilstreifens 29 mit der Innenseite der Vorderwand 13 verbunden wird. Diese Vornaht 41 erstreckt sich im Bereich der später anzubringenden Verschlussnaht 22. In diesem ersten Siegelverfahren wird demnach das Ziplock 28 mit drei parallelen Siegelnähten 35, 36, 41 ausschließlich mit der Vorderwand 13 verbunden. Zugleich werden Quernähte 42 angebracht, die die Enden der (oberen) Verbindungsnaht 35 mit der Quernaht 42 verbinden (Fig. 20). Dadurch ist die Entnahmeöffnung 20 allseits von stabilisierenden Siegelnähten umgeben.

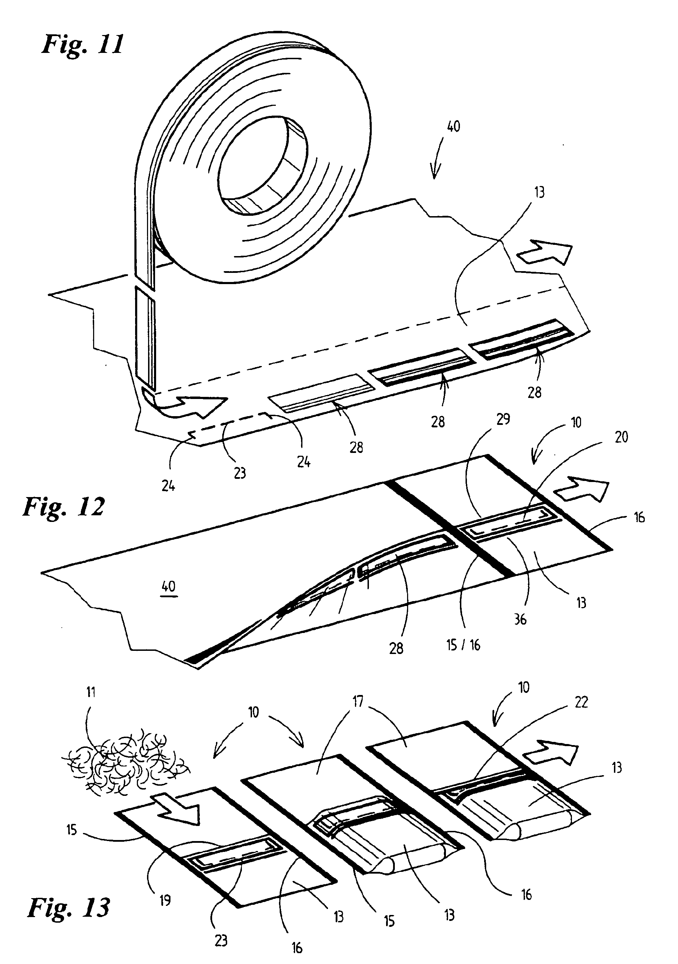

Ein Randstreifen der Materialbahn 40 wird nun fortlaufend umgefaltet (Fig. 12) zur Bildung der Bereiche der Vorderwand 13. Sodann werden die Seitennähte 15, 16 als Doppelnaht durch Quersiegeln an der Materialbahn 40 angebracht und die Beutel 10 von der Materialbahn 40 abgetrennt (Fig. 13).

Die einzelnen Beutel 10 werden nun mit Abstand voneinander weitertransportiert, wobei quer zur Förderrichtung die Tabakportion 11 über die freie Füllöffnung 19 in den Beutel 10 eingeführt wird. Das Verschlussmittel, nämlich das Ziplock 28 ist dabei gegen den Tabak durch den Trägerstreifen 31 abgedeckt, so dass in diesen Bereich auch durch die Wirkung der Vornaht 41 kein Tabak gelangen kann. Die innerhalb des Beutels liegenden Siegelnähte 36 und 39 sind am Rand bzw. mit geringem Abstand vom Rand der Profilstreifen 30, 31 angeordnet, sodass beim Einfüllen und insbesondere während der Benutzung des Beutels Tabakinhalt nicht zwischen Profilstreifen des Ziplocks und Wandungen des Beutels gelangen kann.

Nach dem Einfüllen der Tabakportion 11 wird die Verschlussnaht 22 im Bereich der Quernaht 42 hergestellt. Des Weiteren wird die Verbindungsnaht 39 zur Fixierung des Profilstreifens 29 an der Innenseite der Rückwand 14 unterhalb des Verbindungsprofils 33 angebracht. Der Beutel 10 ist damit gebrauchsfertig.

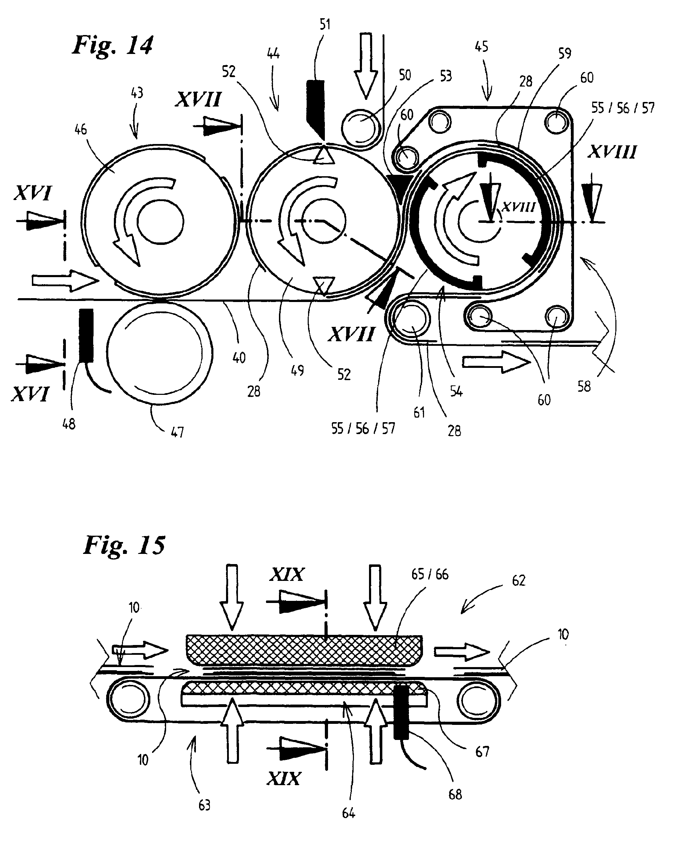

Eine weitere Besonderheit sind Einheiten bzw. Aggregate einer Vorrichtung. Eine erste Vorrichtungseinheit gemäß Fig. 14 ist mit einem Perforationsaggregat 43 zum Anbringen der Perforationslinie 23 bzw. 25, einem nachfolgenden Übertragungsorgan 44 zum Aufbringen der Ziplock-Abschnitte auf die Materialbahn 40 und mit einem Siegelaggregat 45 zum Anbringen mehrerer Verbindungsnähte während des Transports der Materialbahn 40 versehen. Das Perforationsaggregat 43 besteht aus einer Perforationswalze 46 oberhalb der horizontal verlaufenden Materialbahn 40 und einer Gegenwalze 47 unterhalb der Materialbahn 40. Eine Umfangsfläche der Perforationswalze 46 weist Schneid- bzw. Perforationsmesser auf, die infolge Drehung der Perforationswalze 46 auf die entsprechend transportierte Materialbahn Schwächungslinien bzw. Perforationslinien übertragen. Die exakte Relativstellung der Materialbahn 40 wird durch einen Sensor 48 überwacht.

Das in Förderrichtung unmittelbar anschließende Übertragungsorgan 44 besteht aus einer Saugwalze 49. Dieser wird ein fortlaufender Streifen Ziplock 28 an der Oberseite zugeführt und mittels Umlenkwalze 50 an den Umfang der Saugwalze 49 angelegt. An der Oberseite der Saugwalze 49 ist ein Trennaggregat positioniert, nämlich ein feststehendes Trennmesser 51, das mit jeweils einem von zwei einander diametral gegenüberliegenden Gegenmessern 52 an der Saugwalze 49 zusammenwirkt. Der von dem fortlaufenden Streifen abgetrennte Ziplock-Abschnitt wird durch die Saugwalze 49 mit geringfügig höherer Umfangsgeschwindigkeit weitergefördert, so dass auf der Saugwalze 49 die erforderlichen Abstände zwischen den Abschnitten des Ziplocks 28 geschaffen werden. Die Ziplock-Abschnitte werden von der Saugwalze 49 auf die Materialbahn 40 übertragen. Ein keilförmiges Ablenkorgan 53 bewirkt, dass die Einheit aus Materialbahn 40 und Ziplock-Abschnitt von dem Umfang der Saugwalze 49 abgehoben und auf die Umfangsfläche einer unmittelbar anschließenden Siegelwalze 54 übertragen wird.

Die Siegelwalze 54 ist Teil des Siegelaggregats 45. Die Siegelwalze 54 weist in Umfangsrichtung verlaufende, also bogenförmige Siegelbacken bzw. Siegelstreifen 55, 56, 57 auf. Diese Siegelstreifen 55, 56, 57 sind segmentartig ausgebildete, beheizbare Stege, die sich parallel zueinander in Umfangsrichtung der Siegelwalze 54 erstrecken und an der Oberfläche, nämlich an der Anlagefläche der Materialbahn 40, die erforderliche Siegeltemperatur erzeugen. In Umfangsrichtung entspricht die Länge dieser Siegelstreifen 55, 56, 57 der Länge der jeweils zu erzeugenden Siegelnaht 35, 36, 41. Die Abmessungen sind insgesamt so gewählt, dass je Umdrehung der Walzen 46, 49, 54 zwei Beutel 10 vorbereitet, nämlich mit Perforationen und Ziplock-Abschnitten versehen werden. Die Siegelwalze 54 weist demnach in Umfangsrichtung zwei im Abstand voneinander angeordnete Gruppen von Siegelstreifen 55, 56, 57 auf.

Die Siegelwalze 54 ist mit einer Außenführung versehen, die während der Anlage der Materialbahn 40 am Umfang der Siegelwalze 54 einen gewissen Anlagedruck erzeugt, um die Wirkung der Siegelstreifen 55, 56, 57 sicher zu stellen. Die Außenführung besteht aus einem Förderband bzw. Gurt 58, der beginnend im Bereich des Ablenkorgans 53 mit einem Führungstrum 59 am Umfang der Siegelwalze 54 bzw. an der Materialbahn 40 anliegt. Mehrere Umlenkwalzen 60 bewirken die formschlüssige Anlage des Gurts 58 bzw. des Führungstrums 59.

Die mit den Abschnitten des Ziplocks 28 versehene Materialbahn 40 wird über eine Umlenkwalze 61 nach Verlassen des Umfangs der Siegelwalze 54 in horizontaler Richtung weitertransportiert, wobei das Ziplock 28 jeweils an der Oberseite bleibt. Durch ein bekanntes Führungsorgan wird nun der Randstreifen zur Bildung der Vorderwand 13 umgelenkt. Ebenfalls in bekannter Weise werden die (doppelt breiten) Quernähte zur Bildung der Seitennähte 15, 16 angebracht und die Beutel 10 von der Materialbahn 40 abgetrennt.

Nach dem Füllen der Beutel 10 gelangen diese in den Bereich einer Siegeleinheit 62 gemäß Fig. 15. In deren Bereich wird der Beutel hinsichtlich der Siegelungen komplettiert. Zum einen wird die Verschlussnaht 22 angebracht, und zwar im bereich der Vornaht 41. Zum anderen wird der rückseitige Profilstreifen 29 des Ziplocks 28 mit der Rückwand 14 durch die unterhalb der Verbindungsprofile 33, 34 gebildete Verbindungsnaht 39 fixiert.

Die in Querstellung zugeführten Beutel 10 werden an einen Zwischenförderer 63 übergeben, der die Beutel nacheinander taktweise durch die Siegeleinheit 62 hindurchtransportiert. Der jeweils bearbeitete Beutel 10 liegt auf einem Obertrum des Zwischenförderers 63 auf, nämlich zwischen einer unteren Auflage 64 und oberen, auf- und abbewegbaren Siegelorganen, nämlich streifenförmigen Siegelstücken 65, 66. Die Auflage 64 besteht aus elastischem Werkstoff bzw. weist eine elastische Oberschicht 67 aus Gummi oder dergleichen auf. Diese passt sich der unterschiedlichen Dicke bzw. Lagenformation des Beutels 10 in diesem Bereich an (Fig. 19). Im Bereich der Siegeleinheit 62 ist demnach der Beutel 10 mit der Rückwand 14 nach oben gerichtet bzw. den Siegelorganen 65, 66 für die abschließende Siegelung zugekehrt.

Die exakte Stellung des Beutels 10 in der Siegeleinheit 62 wird durch einen Sensor 68 überwacht bzw. gesteuert.

### Bezugszeichenliste

- 10: Beutel
- 11: Tabakportion
- 12: Bodenkante
- 13: Vorderwand
- 14: Rückwand
- 15: Seitennaht
- 16: Seitennaht
- 17: Umschlaglasche
- 18: Klebeetikett
- 19: Füllöffnung
- 20: Entnahmeöffnung
- 21: Querrand
- 22: Verschlussnaht
- 23: Perforationslinie
- 24: Perforationsschenkel
- 25: Perforationslinie
- 26: Verschlussstreifen
- 27: Grifflasche
- 28: Ziplock
- 29: Profilstreifen
- 30: Profilstreifen
- 31: Trägerstreifen
- 32: Trägerstreifen
- 33: Verbindungsprofil
- 34: Verbindungsprofil
- 35: Verbindungsnaht
- 36: Verbindungsnaht
- 37: Überstand
- 38: Folienstreifen
- 39: Verbindungsnaht
- 40: Materialbahn
- 41: Vornaht
- 42: Quernaht
- 43: Perforationsaggregat
- 44: Übertragungsorgan
- 45: Siegelaggregat
- 46: Perforationswalze
- 47: Gegenwalze
- 48: Sensor
- 49: Saugwalze
- 50: Umlenkwalze
- 51: Trennmesser
- 52: Gegenmesser
- 53: Ablenkorgan
- 54: Siegelwalze
- 55: Siegelstreifen
- 56: Siegelstreifen
- 57: Siegelstreifen
- 58: Gurt
- 59: Führungstrum
- 60: Umlenkwalze
- 61: Umlenkwalze
- 62: Siegeleinheit
- 63: Zwischenförderer
- 64: Auflage
- 65: Siegelstück
- 66: Siegelstück
- 67: Oberschicht
- 68: Sensor

## Patentansprüche

1. Beutel aus Folie oder dergleichen für Schüttgüter oder faseriges Material, insbesondere für eine Tabakportion (11) als Packungsinhalt, bestehend aus Vorderwand (13) und Rückwand (14), die eine insbesondere obere Öffnung begrenzen und seitlich sowie im Bereich eines der Öffnung gegenüberliegenden Bodens bzw. einer Bodenkante (12) vor dem Einfüllen des Packungsinhalts miteinander verbunden sind, wobei
a) der Beutel mindestens zwei eigenständige, benachbart zueinander angeordnete Öffnungen aufweist, von denen eine Füllöffnung (19) zum Einfüllen des Beutelinhalts dient und nach Einfüllen des Beutelinhalts durch eine Verschlussnaht (22) dauerhaft verschlossen ist und die andere Öffnung, nämlich eine Entnahmeöffnung (20) zur Entnahme von Beutelinhalt dient,
b) die Entnahmeöffnung (20) ein mehrfach wirkendes Verschlussmittel in Form eines Ziplocks (28) aufweist, der
c) die Entnahmeöffnung (20) ausschließlich im Bereich der Vorderwand (13) unmittelbar unterhalb der Verschlussnaht (22) in der Vorderwand (13) gebildet ist,
d) das Ziplock (28) innenseitig zwischen Vorderwand (13) und Rückwand (14) angebracht und mit der Vorderwand (13) einerseits und der Rückwand (14) andererseits verbunden ist, **dadurch gekennzeichnet, daß**
e) ein rückseitiger Profilstreifen (29) des Ziplocks (28) unterhalb des Verbindungsprofils (33) mit der Rückwand (14) durch eine Verbindungsnaht (39) und oberhalb des Verbindungsprofils (33) im Bereich der Verschlussnaht (22) mit der Rückwand (14) und der Vorderwand (13) verbunden ist.

2. Beutel nach Anspruch 1, **dadurch gekennzeichnet, dass** die Füllöffnung (19), nach Einfüllen des Beutelinhalts durch thermisches Siegeln oder durch Klebung verschlossen ist.

3. Beutel nach Anspruch 1 oder 2, **dadurch gekennzeichnet, dass** die Füllöffnung (19) im Bereich eines freien Querrandes (21) der Vorderwand (13) einerseits und der Rückwand (14) andererseits bzw. einer Umschlaglasche (17) der Rückwand (14) gebildet ist.

4. Beutel nach Anspruch 1 oder einem der weiteren Ansprüche, **dadurch gekennzeichnet, dass** zur Bildung der Entnahmeöffnung (20) die Vorderwand (13) oberhalb des Ziplocks (28) bzw. oberhalb von verschließbaren Verbindungsprofilen (33, 34) des Ziplocks (28) eine langgestreckte Schwächungslinie aufweist, insbesondere eine Perforationslinie (23) bzw. eine doppelte Perforationslinie (25) zur Begrenzung eines aus der Vorderwand (13) heraustrennbaren Verschlussstreifens (26).

5. Beutel nach Anspruch 1 oder einem der weiteren Ansprüche, **dadurch gekennzeichnet, dass** ein frontseitiger Profilstreifen (30) des Ziplocks (28) mit der Vorderwand (13) unterhalb der Entnahmeöffnung (20) verbunden ist, insbesondere durch je eine Verbindungsnaht (35, 36) oberhalb und unterhalb des Verbindungsprofils (34).

6. Beutel nach Anspruch 1 oder einem der weiteren Ansprüche, **dadurch gekennzeichnet, dass** der rückseitige Profilstreifen (29) des Ziplocks (28) vor Anbringen der Verschlussnaht (22) und vor Einfüllen des Beutelinhalts mittels Vornaht (41) oberhalb des Profilstreifens (29) mit der Innenseite der Vorderwand (13) verbunden ist, wobei sich die Vornaht (41) vorzugsweise im Bereich der Verschlussnaht (22) erstreckt.

7. Verfahren zum Herstellen von Beuteln (10) aus Vorderwand (13) und Rückwand (14) sowie ggf. einer mit der Rückwand (14) verbundenen Umschlaglasche (17) zur Aufnahme von Tabakportionen (11) als Beutelinhalt, wobei die Beutel (10) aus einer fortlaufenden Folienbahn bzw. Materialbahn (40) nach Bildung der Vorderwand (13) durch Umfalten eines Randstreifens der Materialbahn (40) durch quergerichtete Trennschnitte unter gleichzeitiger Herstellung von Seitennähten (15, 16) zur Verbindung von Vorderwand (13) und Rückwand (14) hergestellt werden, wobei
a) an einem der herzustellenden Vorderwand (13) zugekehrten Rand der Materialbahn (40) während des Transports der Materialbahn (40) aufeinanderfolgend in Längsrichtung der Materialbahn (40) verlaufende Schwächungslinien, insbesondere Perforationslinien (23, 25) in der Materialbahn (40) angebracht werden,
b) sodann im Bereich der Schwächungslinien auf die nach oben gerichtete Innenseite im Bereich der herzustellenden Vorderwand (13) Abschnitte von mehrfach wirkenden Verschlussmitteln aufgebracht werden, nämlich Abschnitte eines aus Profilstreifen (29, 30) bestehenden Ziplocks (28),
c) die Abschnitte des Ziplocks (28) sodann unter Überdeckung der Perforationslinie (23, 25) mit der Materialbahn (40) verbunden werden, insbesondere durch thermisches Siegeln,
d) sodann der Randstreifen der Materialbahn (40) zur Bildung der Vorderwände (13) der Beutel (10) umgefaltet wird,
e) danach die quergerichteten Seitennähte (15, 16) außerhalb der Abschnitte des Ziplocks (28) angebracht und die Beutel (10) durch quergerichteten Trennschnitt hergestellt werden,
f) sodann die Tabakportion (11) in den Beutel (10) eingeführt wird,
g) schließlich die Verschlussnaht (22) im Bereich der Füllöffnung (19) angebracht wird wodurch die Vorderwand (13), das Ziplock (28) und die Rückwand (14) miteinander verbunden verden.

8. Verfahren nach Anspruch 7, **dadurch gekennzeichnet, dass** das geschlossene Ziplock (28) in einem ersten Siegelschritt mit der Materialbahn (40) im Bereich der Innenseite der Vorderwand (13) verbunden wird, und zwar der frontseitige Profilstreifen (30) mittels zweier Verbindungsnähte (35, 36) und der rückseitige Profilstreifen (29) mittels einer Vornaht (41) oberhalb der Verbindungsnaht (35) bzw. oberhalb des Profilstreifens (30).

9. Verfahren nach Anspruch 7 oder 8, **dadurch gekennzeichnet, dass** der rückseitige Profilstreifen (29) des Ziplocks (28) nach Einfüllen der Tabakportion (11) in einem weiteren Siegelschritt unterhalb des Verbindungsprofils (33) mit der Rückwand verbunden wird, insbesondere mittels Verbindungsnaht (39).

10. Verfahren nach Anspruch 9, **dadurch gekennzeichnet, dass** die Verschlussnaht (22) und die Verbindungsnaht (39) während momentaner Ruhestellung des Beutels (10) an diesem angebracht werden.

## Claims

1. A pouch made of film or the like for bulk goods or fibrous material, in particular for a portion of tobacco (11) as pack content, comprising front wall (13) and rear wall (14), which bound an in particular upper opening and are connected to each other laterally and in the region of a base edge (12) opposite the opening before the pack content is put in, it being the case that
a) the pouch has two independent openings arranged adjacent to each other, of which one filling opening (19) serves for the pouch content to be put in and is permanently closed by means of a closure seam (22) after the pouch content has been put in, and the other opening, namely a removal opening (20), serves for the removal of the pouch content,
b) the removal opening (20) has a ziplock (28) as a closure means which acts repeatedly,
c) the removal opening (20) is formed in the front wall (13) exclusively in the region of the front wall (13) that is immediately underneath the closure seam (22),
d) the ziplock (28) is fitted on the inner side between front wall (13) and rear wall (14) and is connected to the front wall (13), on one hand, and to the rear wall (14), on the other hand, **characterized in that**
e) a rear profiled strip (29) is connected below the connecting profile (33) to the rear wall (14) by means of a connecting seam (39) and is connected above the connecting profile (33) to the rear wall (14) and to the front wall (13) in the region of the closure seam (22).

2. The pouch according to Claim 1, **characterized in that** the filling opening (19) is closed by thermal sealing or by means of adhesion after the pouch has been filled.

3. The pouch according to Claim 1 or 2, **characterized in that** the filling opening (19) is formed in the region of a free transverse edge (21) of the front wall (13), on the one hand, and of the rear wall (14), on the other hand, or a fold-over flap (17) of the rear wall (14).

4. The pouch according to Claim 1 or one of the further Claims, **characterized in that**, in order to form the removal opening (20), the front wall (13) above the ziplock (28) or above the closable connecting profiles (33, 34) of the ziplock (28) has an elongated weakening line, in particular a perforation line (23) or a double perforation line (25), in order to bound a closure strip (26) that can be divided out of the front wall (13).

5. The pouch according to Claim 1 or one of the further Claims, **characterized in that** a profiled strip (30) on the front side of the ziplock (28) is connected to the front wall (13) underneath the removal opening (20), in particular by a connecting seam (35, 36) in each case above and below the connecting profile (34).

6. The pouch according to Claim 1 or one of the further Claims, **characterized in that** the profiled strip (29) on the rear side of the ziplock (28) is connected to the inner side of the front wall (13) by means of a preliminary seam (41) above the profiled strip (29) before the fitting of the closure seam (22) and before the pouch content is put in, the preliminary seam (41) preferably extending in the region of the closure seam (22).

7. A method for producing pouches (10) comprising front wall (13) and rear wall (14) and, if appropriate, a fold-over flap (17) connected to the rear wall (14), in order to hold portions of tobacco (11) as pouch content, the pouches (10) being produced from a continuous film web or material web (40) by forming the front wall (13) by folding over an edge strip of the material web (40) by means of transversely oriented dividing cuts, with the simultaneous production of lateral seams (15, 16) for connecting front wall (13) and rear wall (14), it being the case that:
a) at an edge of the material web (40) facing the front wall (13) to be produced, during the transport of the material web (40), weakening lines running successively in the longitudinal direction of the material web (40), in particular perforation lines (23, 25), are made in the material web (40),
b) then, in the region of the weakening lines, sections of closure means that act repeatedly are applied to the upwardly oriented inner side in the region of the front wall (13) to be produced, specifically sections of a ziplock (28) consisting of profiled strips (29, 30),
c) the sections of the ziplock (28) are then connected to the material web (40), in particular by means of thermal sealing, covering the perforation line (23, 25),
d) the edge strip of the material web (40) is then folded over in order to form the front walls (13) of the pouch (10),
e) after that, the transversely oriented lateral seams (15, 16) are made outside the sections of the ziplock (28), and the pouches (10) are produced by means of a transversely oriented dividing cut,
f) the portion of tobacco (11) is then introduced into the pouch (10),
g) finally, the closure seam (22) is made in the region of the filling opening (19), thereby connecting the front wall (13), the ziplock (28), and the rear wall (14) to each other.

8. The method according to claim 7, **characterized in that** the closed ziplock (28) is connected to the material web (40) in the region of the inner side of the front wall (13) in a first sealing step, to be specific, the profiled strip (30) on the front side by means of two connecting seams (35, 36), and the profiled strip (29) on the rear side by means of a preliminary seam (41) above the connecting seam (35) and above the profiled strip (30).

9. The method according to Claim 7 or 8, **characterized in that** the profiled strip (29) on the rear side of the ziplock (28) is connected to the rear wall underneath the connecting profile (33) in a further sealing step, in particular by means of a connecting seam (39), after a portion of tobacco (11) has been put in.

10. The method according to Claim 9, **characterized in that** the closure seam (22) and the connecting seam (39) are made on the pouch (10) in an instantaneous rest position of the latter.

## Revendications

1. Sachet constitué d'une feuille ou similaire pour des produits en vrac ou des matières fibreuses, notamment pour une portion de tabac (11) en tant que contenu du paquet, constitué d'une paroi avant (13) et d'une paroi arrière (14), qui délimitent une ouverture notamment supérieure et qui sont connectées l'une à l'autre latéralement ainsi que dans la région d'un fond opposé à l'ouverture ou d'une arête de fond (12) avant le remplissage du contenu du paquet,
a) le sachet présentant au moins deux ouvertures autonomes, disposées l'une à côté de l'autre, dont une ouverture de remplissage (19) sert au remplissage du contenu du sachet et après le remplissage du contenu du sachet est fermée de manière durable par un joint de fermeture (22), et dont l'autre ouverture, à savoir une ouverture de prélèvement (20), sert au prélèvement du contenu du sachet,
b) l'ouverture de prélèvement (20) présentant un moyen de fermeture refermable en forme de fermeture à glissière (28),
c) l'ouverture de prélèvement (20) étant formée exclusivement dans la région de la paroi avant (13) directement sous le joint de fermeture (22) dans la paroi avant (13),
d) la fermeture à glissière (28) étant montée du côté intérieur entre la paroi avant (13) et la paroi arrière (14), et étant connectée d'une part à la paroi avant (13) et d'autre part à la paroi arrière (14), **caractérisé en ce**
e) **qu**'un ruban profilé arrière (29) de la fermeture à glissière (28) est connecté sous le profilé de connexion (33) à la paroi arrière (14) par un joint de connexion (39) et au-dessus du profilé de connexion (33) dans la région du joint de fermeture (22) à la paroi arrière (14) et à la paroi avant (13).

2. Sachet selon la revendication 1, **caractérisé en ce que** l'ouverture de remplissage (19), après le remplissage du contenu du sachet, est fermée par thermoscellage ou par collage.

3. Sachet selon la revendication 1 ou 2, **caractérisé en ce que** l'ouverture de remplissage (19) est formée dans la région d'un bord transversal libre (21) de la paroi avant (13) d'une part et de la paroi arrière (14) d'autre part, ou d'un volet de repli (17) de la paroi arrière (14).

4. Sachet selon la revendication 1 ou selon l'une quelconque des autres revendications, **caractérisé en ce que** pour former l'ouverture de prélèvement (20), la paroi avant (13) présente, au-dessus de la fermeture à glissière (28) ou au-dessus de profilés de connexion refermables (33, 34) de la fermeture à glissière (28), une ligne d'affaiblissement allongée, notamment une ligne de perforations (23) ou une double ligne de perforations (25) pour limiter un ruban de fermeture (26) pouvant être séparé de la paroi avant (13).

5. Sachet selon la revendication 1 ou selon l'une quelconque des autres revendications, **caractérisé en ce qu'**un ruban profilé avant (30) de la fermeture à glissière (28) est connecté à la paroi avant (13) sous l'ouverture de prélèvement (20), notamment par un joint de connexion respectif (35, 36), au-dessus et en dessous du profilé de connexion (34).

6. Sachet selon la revendication 1 ou selon l'une quelconque des autres revendications, **caractérisé en ce que** le ruban profilé arrière (29) de la fermeture à glissière (28) est connecté avant le montage du joint de fermeture (22) et avant le remplissage du contenu du sachet, au moyen d'un joint'préalable (41), au-dessus du ruban profilé (29), au côté intérieur de la paroi avant (13), le joint préalable (41) s'étendant de préférence dans la région du joint de fermeture (22).

7. Procédé de fabrication de sachets (10) constitués d'une paroi avant (13) et d'une paroi arrière (14) ainsi qu'éventuellement d'un volet de repli (17) connecté à la paroi arrière (14), pour recevoir des portions de tabac (11) en tant que contenu du sachet, les sachets (10) étant fabriqués à partir d'une bande de feuille continue ou d'une bande de matériau (40) après formation de la paroi avant (13) par repliement d'un ruban de bord de la bande de matériau (40), par des portions de séparation orientées transversalement en créant simultanément des joints latéraux (15, 16) pour la connexion de la paroi avant (13) à la paroi arrière (14), dans lequel :
a) sur un bord de la bande de matériau (40) tourné vers la paroi avant à fabriquer (13), des lignes d'affaiblissement s'étendant les unes après les autres pendant le transport de la bande de matériau (40) dans la direction longitudinale de la bande de matériau (40), en particulier des lignes de perforations (23, 25), sont pratiquées dans la bande de matériau (40),
b) ensuite, des portions de plusieurs moyens de fermeture agissant de manière refermable sont appliquées dans la région des lignes d'affaiblissement sur le côté intérieur orienté vers le haut dans la région de la paroi avant à fabriquer (13), à savoir des portions d'une fermeture à glissière (28) constituée de rubans profilés (29, 30),
c) les portions de la fermeture à glissière (28) sont ensuite connectées à la bande de matériau (40) en recouvrant la ligne de perforations (23, 25), notamment par thermoscellage,
d) ensuite le ruban de bord de la bande de matériau (40) est replié pour former les parois avant (13) du sachet (10),
e) ensuite les joints latéraux orientés transversalement (15, 16) sont appliqués en dehors des portions de la fermeture à glissière (28), et les sachets (10) sont fabriqués par découpe orientée transversalement,
f) ensuite la portion de tabac (11) est introduite dans le sachet (10),
g) finalement le joint de fermeture (22) est appliqué dans la région de l'ouverture de remplissage (19) de sorte que la paroi avant (13), la fermeture à glissière (28) et la paroi arrière (14) soient connectées les unes aux autres.

8. Procédé selon la revendication 7, **caractérisé en ce que** la fermeture à glissière fermée (28) est connectée dans une première étape de scellage à la bande de matériau (40) dans la région du côté intérieur de la paroi avant (13), à savoir le ruban profilé avant (30), au moyen de deux oints de connexion (35, 36) et le ruban profilé arrière (29) au moyen d'un joint préalable (41) au-dessus du joint de connexion (35) ou au-dessus du ruban profilé (30).

9. Procédé selon la revendication 7 ou 8, **caractérisé en ce que** le ruban profilé arrière (29) de la fermeture à glissière (28) est connecté à la paroi arrière après le remplissage de la portion de tabac (11) dans une autre étape de scellage sous le profilé de connexion (33), notamment au moyen d'un joint de connexion (39).

10. Procédé selon la revendication 9, **caractérisé en ce que** le joint de fermeture (22) et le joint de connexion (39) sont appliqués sur le sachet (10) pendant l'arrêt momentané de ce dernier.
